# NEUE EUROPÄISCHE PATENTSCHRIFT

(11) **EP 1 520 681 B2**
(45) Veröffentlichungstag und Bekanntmachung des Hinweises auf die Entscheidung über den Einspruch: **21.12.2016**
(45) Hinweis auf die Patenterteilung: 17.05.2006
(21) Anmeldenummer: 04022882.7
(22) Anmeldetag: 24.09.2004
(51) Int. Cl.: B29C 49/56, B29C 49/36

(54) **Vorrichtung zur Blasformung von Behältern**
Device for blowmoulding plastic containers/bottles
Dispositif pour mouler par soufflage des corps creux en matière thermoplastique

(30) Priorität: 04.10.2003 DE 10346089
(43) Veröffentlichungstag der Anmeldung: 06.04.2005
(73) Patentinhaber: KHS Corpoplast GmbH, 22145 Hamburg (DE)
(72) Erfinder: Linke, Michael, 22926 Ahrensburg (DE); Choinski, Julian, 22359 Hamburg (DE)
(74) Vertreter: Hausfeld, Norbert

(56) Entgegenhaltungen:
- EP-A- 1 112 835
- DE-A- 19 948 474
- US-A- 4 035 463
- US-B1- 6 805 548

## Beschreibung

Die Erfindung betrifft eine Vorrichtung zur Blasformung von Behältern, die mindestens zwei auf einem Blasrad angeordnete Blasstationen zur Umformung von thermoplastischen Vorformlingen in die Behälter aufweist und bei der jede der Blasstationen mit mindestens zwei von Formträgern gehalterten Blasformsegmenten versehen ist sowie bei der die Blasformsegmente in einem geschlossenen Zustand der Blasstation entlang einer Trennebene angeordnet und von mindestens einem Verriegelungselement relativ zueinander fixiert sind.

Bei einer derartigen Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE - OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Form-träger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Aus der DE 199 48 474 A ist es bekannt, eine kompakte Blaseinrichtung dadurch bereitzustellen, daß einander benachbarte Blasstationen relativ zueinander derart beweglich angeordnet werden, daß Abstände zwischen benachbarten Blasstationen nur dann vorliegen, wenn eine Öffnung einer der beteiligten Blasstationen erforderlich ist. In einem geschlossenen Zustand sind die Blasstationen hingegen unmittelbar nebeneinander angeordnet und stützen sich gegenseitig ab.

In der WO 00/69614 werden Blasstationen beschrieben, bei denen Blasformsegmente verschwenkbar von einem V-förmige Formträger gehaltert und durch eine radiale Bewegung eines Betätigungselementes gleichsinnig aufgeschwenkt werden. In einem geschlossenen Zustand sind die Blasformsegmente derart gegeneinander abgestützt, daß eine verriegelung der Blasformsegmente relativ zueinander entbehrlich ist.

Ständig zunehmende Anforderungen an die Leistungsfähigkeit der Blasmaschinen führen dazu, daß Blasräder mit einer relativ großen Anzahl von Blasstationen verwendet werden und daß die Blasräder relativ schnell rotieren. Die große Anzahl der Blasstationen führt zu einem großen Durchmesser der Blasräder und die hohen Drehzahlen führen zu starken Brems- und Beschleunigungskräften aufgrund der kinetischen Energie der bewegten Massen.

Zur Verringerung dieser nachteiligen Effekte ist bereits vorgeschlagen worden, die Blasräder mit einer kompakten Anordnung von Blasstationen zu konstruieren. Eine Vielzahl von Konstruktionsvarianten sind in der DE-OS 199 48 474 beschrieben.

Das Dokument US-A-4 035 463 eine relativ kompakte Konstruktion der Blasmaschine, bei der die Formträger, die die Blasformsegmente haltern, ineinander greifen d. h. dass sich mindestens ein Tragarm mindestens einer Blasstation in mindestens einem Betriebszustand in einem Bereich erstreckt, der sich mit einem Bezugsbereich überdeckt, der durch ein an einer radialen Mittelebene gespiegeltes Volumen eines gleichen Tragarmes einer benachbarten Blasstation definiert ist, wobei die Mittelebene durch eine Drehachse des Blasrades und eine Drehachse der Formträger hindurch verläuft.

Aufgabe der vorliegenden Erfindung ist es, eine Vorrichtung der einleitend genannten Art derart zu konstruieren, dass eine besonders kompakte Konstruktion der Blasmaschine erreicht wird.

Dabei wird erfindungsgemäss zur Realisierung einer Konturverschachtelung vorgeschlagen, dass sich die benachbarten Formträger im Bereich von Verrippungen überlappen, die auf relativ zueinander unterschiedlichen Höhenniveaus angeordnet sind.

Die bekannten Blasstationen sind derart konstruiert, dass zur Mittelebene symmetrisch angeordnete Formträger oder Tragarme verwendet werden, die symmetrisch und gleichsinnig angesteuert werden. Dies führt zu einem Abstand zwischen den Blasstationen, der ein vollständiges Öffnen der Blasstationen zu jeder beliebigen Rotationspositionierung des Blasrades ermöglicht.

Bei der erfindungsgemäss vorgeschlagenen Anordnung der Formträger wird berücksichtigt, dass zum einen die in die Blasstation einzusetzenden Vorformling einen erheblich kleineren Durchmesser als die auszugebenden Flaschen aufweisen. Darüber hinaus wird berücksichtigt, dass sowohl die Blasstationen als auch die Übergabeelemente zur Halterung der Vorformlinge bzw. der Flaschen während der Durchführung der Übergabevorgänge Bewegungen durchführen. Schliesslich wird ebenfalls berücksichtigt, dass ein Übergabevorgang nicht exakt in einer radialen Richtung des Blasrades erfolgt, sondern dass zumindest überlagert weitere Bewegungskomponenten auftreten.

Durch die vorgeschlagene erfindungsgemässe Anordnung der Formträger erfolgt eine jeweilige Positionierung der Formträger jeweils derart, dass der beabsichtigte Eingabe- oder Ausgabevorgang kollisionsfrei möglich ist. Eine unnötig weite Öffnung der Blasstationen bzw. ungünstige Öffnungswinkel der Formträger werden hingegen vermieden.

Bei einer Anordnung der Blasstationen auf einem rotierenden Blasrad können somit auf einer vorgegebenen Blasradgrösse erheblich mehr Blasstationen angeordnet werden bzw. eine vorgegebene Anzahl von Blasstationen kann auf einem deutlich verkleinerten Blasrad positioniert werden. Hieraus ergeben sich erhebliche kinematische Vorteile im Hinblick auf die auftretenden Drehmomente bzw. Trägheitsmomente.

Eine Anordnung der Blasstationen mit geringem Abstand relativ zueinander wird dadurch unterstützt, dass einander benachbarte Formträger sich in mindestens einer Öffnungspositionierung mindestens bereichsweise überdecken.

Eine Anpassung an die Kinematik von Übergabevorgängen kann dadurch erfolgen, daß die Formträger relativ zu einer Trennebene relativ zueinander unterschiedliche Öffnungswinkel aufweisen.

Eine einfache mechanische Ansteuerbarkeit wird dadurch bereitgestellt, daß die Formträger relativ zur Trennebene gekoppelt und gegensinnig positionierbar sind.

Eine weitere Optimierung der Bewegungen der Formträger kann dadurch erfolgen, daß die Formträger relativ zur Trennebene relativ zueinander unabhängig positionierbar angeordnet sind.
Eine weitere Anpassung an die Bewegungsrichtungen bei der Durchführung von Übergabevorgängen kann dadurch erfolgen, daß die Trennebene mit einem Neigungswinkel relativ zu einer radial verlaufenden Bezugsebene angeordnet ist.

Eine einfache konstruktive Realisierung wird dadurch unterstützt, daß die Trennebene relativ zur Bezugsebene mit einem konstanten Neigungswinkel angeordnet ist.

Eine weitere Möglichkeit zur Reduzierung des Abstandes der Blasstation wird dadurch bereitgestellt, daß der Neigungswinkel zeitlich veränderlich ist.

Zur Optimierung der Übergabevorgänge ist ebenfalls daran gedacht, daß die Blasstation verschwenkbar angeordnet ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine schematische Darstellung der Tragarme von zwei nebeneinander angeordneten Blasstationen mit teilweiser Überdeckung benachbarter Tragarme,
- Fig. 6: eine schematische Darstellung einer schräg zu einer radialen Richtung des Blasrades angeordneten Trennebene einer Blasstation und
- Fig. 7: eine schematische Darstellung, die eine bezüglich einer Trennebene der Blasstation unsymmetrische Öffnung der Tragarme veranschaulicht.

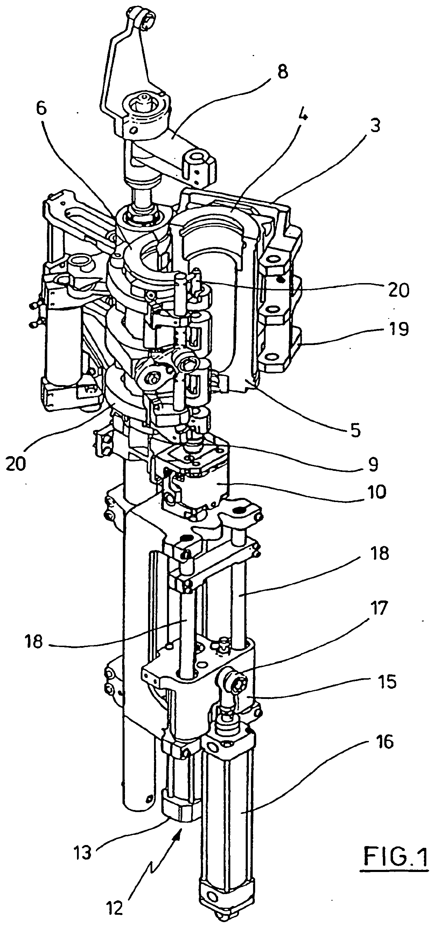

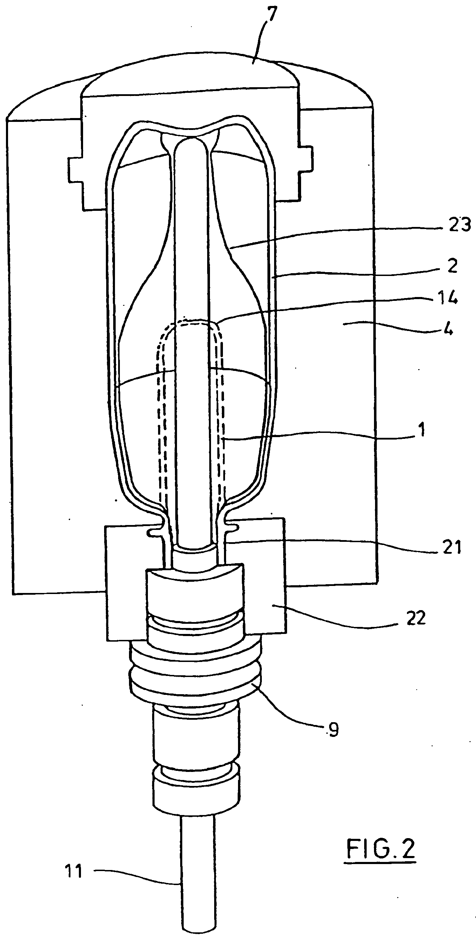

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritz-gegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Formträgern (19, 20) angeordneten Formhälften (5, 6) erfolgt eine Verriegelung der Formträger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

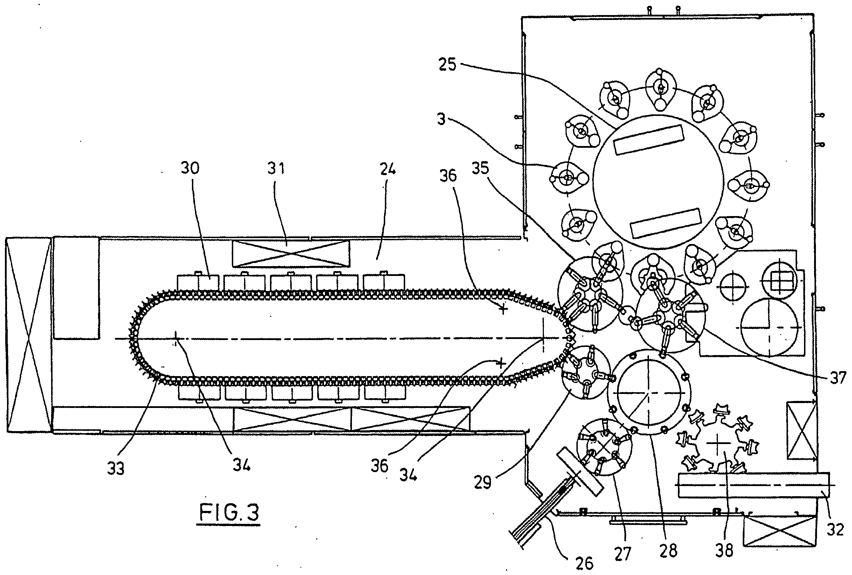

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrekke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von ketten-artigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

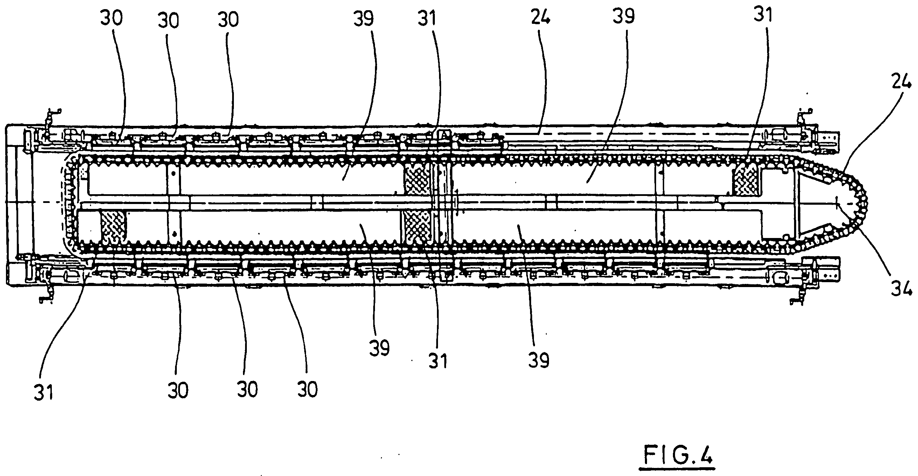

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungs-richtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

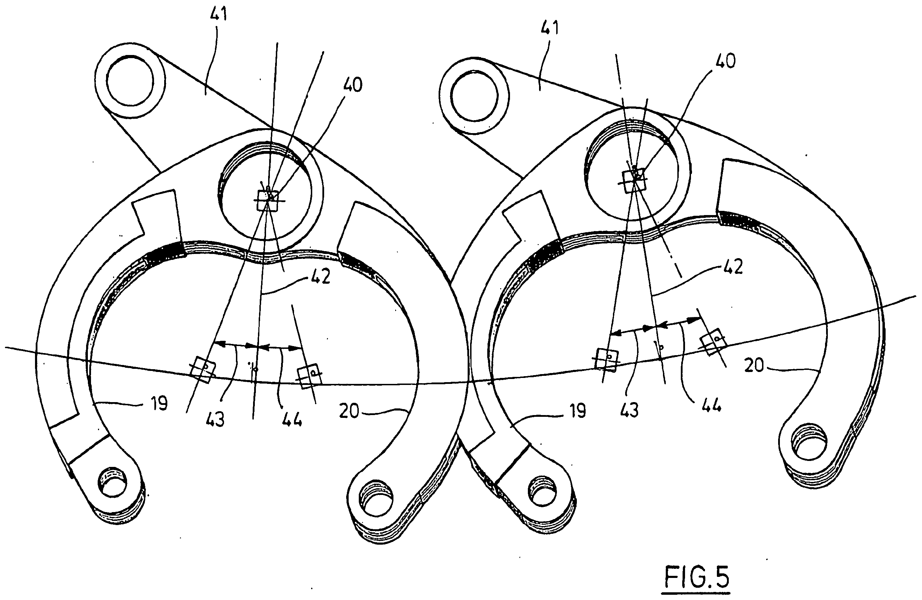

Fig. 5 veranschaulicht die Anordnung von Formträgern (19, 20) miteinander in einem geöffneten Zustand der Blasstation (3) bereichsweise überlappenden Formträgern (19, 20). Zur Ermöglichung einer derartigen Überlappung in einem geöffneten Zustand der Blasstationen (3) weisen die Formträger (19, 20) Verrippungen auf, die auf einem unterschiedlichen Höhenniveau angeordnet sind. Die Formträger (19, 20) sind relativ zur Drehachse (40) der Blasstation (3) verschwenkbar angeordnet. Die Verschwenkung kann über einen Lenkhebel (41) gesteuert werden.

Relativ zu einer Trennebene (42) der Blasstation (3) weisen die Formträger (19) Öffnungswinkel (43, 44) auf. Bei einem dargestellten Ausführungsbeispiel sind die Öffnungswinkel (43, 44) relativ zueinander unterschiedlich.

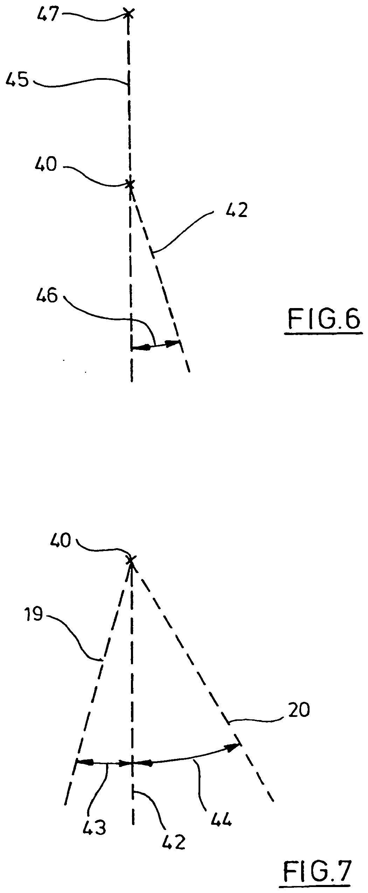

Fig. 6 zeigt eine schematische Darstellung zu einer weiteren Ausführungsvariante. Hier ist veranschaulicht, daß die Trennebene (42) relativ zu einer radial verlaufenden Bezugsebene (45) des Blasrades (25) mit einem Neigungswinkel (46) schräg angeordnet ist. Die Bezugsebene (45) verläuft hierbei durch eine Drehachse (47) des Blasrades (25) und durch die Drehachse (40) der Formträger (19, 20) der Blasstation (3) hindurch. Eine entsprechende schräge Anordnung der Trennebene (42) unterstützt ebenfalls verkleinerte Öffnungswinkel (43, 44) der Blasstationen (3). Die relativ zur Bezugsebene (45) geneigte Anordnung der Trennebene (42) kann statisch oder jeweils nur für bestimmte Zeitspannen dynamisch realisiert werden. Eine dynamische Realisierung kann beispielsweise durch eine verschwenkbare Anordnung der Blasstationen (3) erreicht werden.

Fig. 7 veranschaulicht nochmals die Realisierung relativ zueinander unterschiedlicher Öffnungswinkel (43, 44). Die unterschiedlichen Öffnungswinkel (43) können beispielsweise durch eine bezüglich der Trennebene (42) gleichsinnige, allerdings unterschiedlich schnelle Bewegung der Formträger (19, 20) realisiert werden. Bei einer derartigen Realisierung sind die Formträger (19, 20) hinsichtlich ihrer Bewegungssteuerung starr miteinander verkoppelt. Alternativ ist es aber ebenfalls denkbar, die Formträger (19, 20) voneinander unabhängig zu positionieren und für jeden Formträger beispielsweise eine eigene Kurvensteuerung oder ein eigenständiges Antriebselement vorzusehen.

Die vorstehend beschriebenen Ausführungsvarianten können sowohl alternativ als auch gemeinsam realisiert werden. Ein Optimum einer Kompaktheit wird bei einer gemeinsamen Realisierung aller Ausführungsvarianten erreicht.

## Patentansprüche

1. Vorrichtung zur Blasformung von Behältern (2), die mindestens zwei auf einem Blasrad (25) angeordnete Blasstationen (3) zur Umformung von thermoplastischen Vorformlingen (1) in die Behälter (2) aufweist und bei der jede der Blasstationen (3) mit mindestens zwei von Formträgern (19, 20) gehalterten Blasformsegmenten versehen ist, sowie bei der die Blasformsegmente in einem geschlossenen Zustand der Blasstation (3) entlang einer Trennebene (42) angeordnet und von mindestens einem Verriegelungselement relativ zueinander fixiert sind, wobei sich mindestens ein Formträger (19, 20) mindestens einer Blasstation (3) in mindestens einem Betriebszustand in einem Bereich erstreckt, der sich mit einem Bezugsbereich überdeckt, der durch ein an einer radialen Mittelebene (45) gespiegeltes Volumen eines gleichen Formträgers (19, 20) einer benachbarten Blasstation (3) definiert ist, der bei der Spiegelung in einer maximalen Öffnungspositionierung (43, 44) angeordnet ist, **dadurch gekennzeichnet, dass** die Mittelebene (45) durch eine Drehachse (47) des Blasrades (25) und eine Drehachse (40) der Formträger (19, 20) hindurch verläuft, wobei sich die benachbarten Formträger (19, 20) im Bereich von Verrippungen überlappen, die auf relativ zueinander unterschiedlichen Höhenniveaus angeordnet sind.

2. Vorrichtung nach Anspruch 1, **dadurch gekennzeichnet, dass** einander benachbarte Formträger (19, 20) sich in mindestens einer Öffnungspositionierung mindestens bereichsweise überdecken.

3. Vorrichtung nach einem der Ansprüche 1 oder 2, **dadurch gekennzeichnet, dass** die Formträger (19, 20) relativ zu einer Trennebene (20) relativ zueinander unterschiedliche Öffnungswinkel (43, 44) aufweisen.

4. Vorrichtung nach einem der Ansprüche 1 bis 3, **dadurch gekennzeichnet, dass** die Formträger (19, 20) relativ zur Trennebene (42) gekoppelt und gegensinnig positionierbar sind.

5. Vorrichtung nach einem der Ansprüche 1 bis 3, **dadurch gekennzeichnet, dass** die Formträger (19, 20) relativ zur Trennebene (42) relativ zueinander unabhängig positionierbar angeordnet sind.

6. Vorrichtung nach einem der Ansprüche 1 bis 5, **dadurch gekennzeichnet, dass** die Trennebene (42) mit einem Neigungswinkel (46) relativ zu einer radial verlaufenden Bezugsebene (45) angeordnet ist.

7. Vorrichtung nach Anspruch 6, **dadurch gekennzeichnet, dass** die Trennebene (42) relativ zur Bezugsebene (45) mit einem konstanten Neigungswinkel (46) angeordnet ist.

8. Vorrichtung nach Anspruch 6, **dadurch gekennzeichnet, dass** der Neigungswinkel (46) zeitlich veränderlich ist.

9. Vorrichtung nach einem der Ansprüche 1 bis 8, **dadurch gekennzeichnet, dass** die Blasstation (3) verschwenkbar angeordnet ist.

## Claims

1. A device for blow moulding containers (2), which has at least two blowing stations (3) arranged on a blow wheel (25) for shaping thermoplastic preforms (1) into the container (2), and in the case of which each of the blowing stations (3) is provided with at least two blow moulding segments held by mould carriers (19, 20), and in the case of which the blow moulding segments are arranged along a separating plane (42) in a closed state of the blowing station (3) and are fixed relative to one another by at least one locking element, wherein, in at least one operating state, at least one mould carrier (19, 20) of at least one blowing station (3) extends in an area, which is in line with a reference area, which is defined by a volume of an identical mould carrier (19, 20) of an adjacent blowing station (3) mirrored on a radial centre plane (45), which is arranged in a maximum open positioning (43, 44) upon the mirroring, **characterised in that**
the centre plane (45) runs through an axis of rotation (47) of the blow wheel (25) and an axis of rotation (40) of the mould carriers (19, 20), wherein the adjacent mould carriers (19, 20) overlap in the area of ribbings, which are arranged at height levels, which differ relative to one another.

2. The device according to claim 1, **characterised in that** adjacent mould carriers (19, 20) overlap at least area by area in at least one open positioning.

3. The device according to any one of claims 1 or 2, **characterised in that**, relative to a separating plane (20), the mould carriers (19, 20) have opening angles (43, 44), which differ relative to one another.

4. The device according to any one of claims 1 to 3, **characterised in that** the mould carriers (19, 20) are coupled relative to the separating plane (42) and can be positioned in the opposite direction.

5. The device according to any one of claims 1 to 3, **characterised in that**, relative to the separating plane (42), the mould carriers (19, 20) are arranged so as to be capable of being positioned independently relative to one another.

6. The device according to any one of claims 1 to 5, **characterised in that** the separating plane (42) is arranged at an angle of inclination (46) relative to a reference plane (45), which runs radially.

7. The device according to claim 6, **characterised in that** the separating plane (42) is arranged at a constant angle of inclination (46) relative to the reference plane (45).

8. The device according to claim 6, **characterised in that** the angle of inclination (46) can be changed temporally.

9. The device according to any one of claims 1 to 8, **characterised in that** the blowing station (3) is arranged so as to be capable of being pivoted.

## Revendications

1. Dispositif de moulage par soufflage de récipients (2) présentant au moins deux stations de soufflage (3) agencées sur une roue de soufflage (25) pour la transformation de préformes (1) thermoplastiques en récipients (2), et dont chaque stations de soufflage (3) est équipée d'au moins deux segments de moule de soufflage maintenus par des supports de moule (19, 20), et dont les segments de moule de soufflage, lorsque la station de soufflage (3) est en état fermé, sont agencés le long d'un plan de joint (42) et fixés l'un par rapport à l'autre par au moins un élément de verrouillage, un support de moule (19, 20) au moins d'au moins une station de soufflage (3) s'étendant, lors d'au moins un état opérationnel, dans une zone qui chevauche une zone de référence définie par un volume d'un même support de moule (19, 20) d'une station de soufflage (3) voisine symétrisé par rapport à un plan médian radial (45), ce volume étant, lors de la symétrisation, placé en un positionnement d'ouverture maximale (43, 44), **caractérisé en ce que** le plan médian (45) passe par un axe de rotation (47) de la roue de soufflage (25) et un axe de rotation (40) des supports de moule (19, 20), les supports de moule (19, 20) voisins se chevauchant au niveau de nervurages agencés à des niveaux de hauteur différents l'un par rapport à l'autre.

2. Dispositif selon la revendication 1, **caractérisé en ce que,** en un positionnement d'ouverture au moins, des support de moule (19, 20) voisins se chevauchent au moins en partie.

3. Dispositif selon l'une des revendications 1 ou 2, **caractérisé en ce que** les support de moule (19, 20) présentent, par rapport à un plan de joint (20), des angles d'ouverture (43, 44) différents l'un par rapport à l'autre.

4. Dispositif selon l'une des revendications 1 à 3, **caractérisé en ce que** par rapport au plan de joint (42), les support de moule (19, 20) sont accouplés et peuvent être positionnés en sens inverse.

5. Dispositif selon l'une des revendications 1 à 3, **caractérisé en ce que,** par rapport au plan de joint (42), les support de moule (19, 20) sont agencés de façon à pouvoir être positionnés l'un par rapport à l'autre et indépendamment d'un de l'autre.

6. Dispositif selon l'une des revendications 1 à 5, **caractérisé en ce que** le plan de joint (42) est agencé de façon à former un angle d'inclinaison (46) par rapport à un plan de référence (45) d'orientation radiale.

7. Dispositif selon la revendication 6, **caractérisé en ce que** le plan de joint (42) est agencé de façon à former un angle d'inclinaison (46) constant par rapport au plan de référence (45).

8. Dispositif selon la revendication 6, **caractérisé en ce que** l'angle d'inclinaison (46) est variable dans le temps.

9. Dispositif selon l'une des revendications 1 à 8, **caractérisé en ce que** la station de soufflage (3) est agencée de façon à pouvoir pivoter.
